# EUROPEAN PATENT APPLICATION

(11) **EP 3 422 207 A1**
(43) Date of publication of application: **02.01.2019**
(21) Application number: 17178244.4
(22) Date of filing: 27.06.2017
(51) Int. Cl.: G06F 17/30

(54) **METHOD FOR AN ENHANCED MANAGEMENT OF CONFIGURATION INFORMATION AND/OR STATEFUL INFORMATION IN A COMMUNICATION NETWORK, SYSTEM, PROGRAM AND COMPUTER PROGRAM PRODUCT**

(71) Applicant: Deutsche Telekom AG, 53113 Bonn (DE)
(72) Inventor: SCHATZMAYR, Rainer, 53229 Bonn (DE); AGAPI, Andrei, 1064CN Amsterdam (NL)
(74) Representative: Schwöbel, Thilo K.

(57) **Abstract**

The invention relates a method for an enhanced management of configuration information and/or stateful information in a communication network, wherein the communication network comprises a plurality of network nodes and a distributed NoSQL database functionality, wherein the distributed NoSQL database functionality comprises a plurality of database entities, wherein query messages between the plurality of network nodes and the NoSQL database functionality are transmitted using a data modeling language with a graph-like or tree-like data structure, wherein the query messages comprise graphs referencing vertices stored in the plurality of database entities,
wherein a specific graph of a specific query message comprises references to at least two vertices and relates to a specific query initiating node of the plurality of network nodes,
wherein the specific query message is received by a specific database entity, and, with the help of a query handler module having access to the NoSQL database functionality, the specific query message is solved and/or answered, wherein, in case that the specific query message corresponds to a continuous query, the method comprises the following steps:
-- in a first step, the specific query message reaches or is received by the query handler module on the specific database entity,
-- in a second step, subsequent to the first step, a subscription - related to the specific query message and related to the specific query initiating node of the plurality of network nodes - is generated or installed at the query handler module of the specific database entity,
-- in a third step, subsequent to the second step, the specific query initiating node of the plurality of network nodes is notified on or regarding any changes of the data affected by the specific query message.

## Description

### BACKGROUND

The present invention relates a method for an enhanced management of configuration information and/or stateful information in a communication network, wherein the communication network comprises a plurality of network nodes and a distributed NoSQL database functionality, wherein the distributed NoSQL database functionality comprises a plurality of database entities, wherein query messages between the plurality of network nodes and the NoSQL database functionality are transmitted using a data modeling language with a graph-like or tree-like data structure, wherein the query messages comprise graphs referencing vertices stored in the plurality of database entities,
wherein a specific graph of a specific query message comprises references to at least two vertices and relates to a specific query initiating node of the plurality of network nodes.

Furthermore, the present invention relates to a system for an enhanced management of configuration information and/or stateful information in a communication network, wherein the communication network comprises a plurality of network nodes and a distributed NoSQL database functionality, wherein the distributed NoSQL database functionality comprises a plurality of database entities, wherein query messages between the plurality of network nodes and the NoSQL database functionality are transmittable using a data modeling language with a graph-like or tree-like data structure, wherein the query messages comprise graphs referencing vertices stored in the plurality of database entities, wherein a specific graph of a specific query message comprises references to at least two vertices and relates to a specific query initiating node of the plurality of network nodes.

Additionally, the present invention relates to a program comprising a computer readable program code which, when executed in part on a query profile module, a graph partitioning module, a query router module, a query handler module and/or on a database entity and/or on a network node, causes the query profile module, the graph partitioning module, the query router module, the query handler module and/or the database entity and/or the network node to perform a method according to an embodiment of the present invention.

Additionally, the present invention relates to a computer program product for an enhanced management of configuration information and/or stateful information in a communication network, the computer program product comprising a computer program stored on a storage medium, the computer program comprising program code which, when executed in part on a query profile module, a graph partitioning module, a query router module, a query handler module and/or on a database entity and/or on a network node, causes the query profile module, the graph partitioning module, the query router module, the query handler module and/or the database entity and/or the network node to perform a method according to an embodiment of the present invention.

The management of configuration information and/or stateful information in a communication network relies on network nodes being able to receive configuration data and changes of configuration data from databases as well as write stateful data into the database/store. Therein, the exact handling of query messages, using a data modeling language with a graph-like or tree-like data structure, is extremely important, such that the utilized resources when routing/answering such query messages from network nodes can be minimized in the context that subscriptions for the network nodes to changes of data, configurations etc. are required or beneficial. A typical, non-limiting example of such a data modeling language with a graph-like or tree-like data structure is YANG ("yet another next generation"), which is a data modeling language for the definition of data sent over the NETCONF network configuration protocol.

### SUMMARY

An object of the present invention is to provide an improved method for an enhanced management of configuration information and/or stateful information in a communication network, wherein an improved storage/database functionality is provided such that the required resources for realizing subscriptions or handling continuous queries of network nodes are minimized.

The object of the present invention is achieved by a method for an enhanced management of configuration information and/or stateful information in a communication network, wherein the communication network comprises a plurality of network nodes and a distributed NoSQL database functionality, wherein the distributed NoSQL database functionality comprises a plurality of database entities, wherein query messages between the plurality of network nodes and the NoSQL database functionality are transmitted using a data modeling language with a graph-like or tree-like data structure, wherein the query messages comprise graphs referencing vertices stored in the plurality of database entities,
wherein a specific graph of a specific query message comprises references to at least two vertices and relates to a specific query initiating node of the plurality of network nodes, wherein the specific query message is received by a specific database entity, and, with the help of a query handler module having access to the NoSQL database functionality, the specific query message is solved and/or answered, wherein, in case that the specific query message corresponds to a continuous query, the method comprises the following steps:
-- in a first step, the specific query message reaches or is received by the query handler module on the specific database entity,
-- in a second step, subsequent to the first step, a subscription - related to the specific query message and related to the specific query initiating node of the plurality of network nodes - is generated or installed at the query handler module of the specific database entity,
-- in a third step, subsequent to the second step, the specific query initiating node of the plurality of network nodes is notified on or regarding any changes of the data affected by the specific query message.

According to the present invention, it is thereby advantageously possible to employ a (highly) distributed database functionality (the NoSQL database functionality) for an enhanced management of configuration information and/or stateful information in a communication network, wherein query messages between the plurality of network nodes and the NoSQL (Not only SQL, Not only structured query language) database functionality are transmitted using a data modeling language with a graph-like or tree-like data structure. In particular, it is possible that after a specific query message corresponding to a continuous query is received by a specific database entity (or by the query handler module of the specific database entity), a subscription is generated or installed at the query handler module of the specific database entity, such that the specific query initiating node can subscribe to changes or modifications of data.

According to an embodiment of the present invention, the at least two vertices referenced in the specific graph are distributed within a group of graph partitions across the database entities of the NoSQL database functionality by the following additional steps:
-- in a first additional step, a plurality of query messages is tracked and analyzed by a query profile module, wherein the query profile module generates workload information for a specific vertex referenced in the specific graph of the specific query message of the plurality of query messages associated to storing the specific vertex on a specific database entity out of the plurality of database entities, wherein the workload information for the specific vertex is a function of
   -- the number of query messages of the plurality of query messages referencing the specific vertex,
   -- the frequency of query messages of the plurality of query messages referencing the specific vertex,
   -- wherein, in case the specific vertex is the first or last vertex of a graph partition, the workload information is additionally a function of a communication cost value associated with hopping/transitioning to a vertex in a different graph partition,
   -- in a second additional step - after the first additional step - in dependence of the workload information, a partitioning of the specific graph into a group of graph partitions is performed by a graph partitioning module, wherein each graph partition of the group of graph partitions is distributed to at least one different database entity of the plurality of database entities.

Thereby, it is advantageously possible according to an embodiment of the present invention that vertices (at least two vertices, but usually more than two vertices) that are referenced in a specific graph of the specific query message are distributed among a group of graph partitions across different database entities which are part of the NoSQL database functionality as part of a first additional step and a second additional step. Thereby, it is advantageously possible to reduce the number of network hops (between different database entities) that are needed to solve a query, especially relating to a continuous query, and to improve the handling of continuous queries/subscriptions. Thereby, it is advantageously possible that a message exchange of query messages using a graph-like or tree-like data structure between a plurality of network nodes and a NoSQL database functionality is handled more efficiently because the vertices referenced in the graphs of the query messages of the plurality of query messages (or at least the vertices referenced in the specific graph of the specific query message of the plurality of query messages) are distributed among a plurality of database entities that are part of the NoSQL database functionality in an efficient way such that, when handling a specific query message (or additional query messages), a reduced of amount of database entities of the plurality of database entities is involved in handling the specific query message (and/or the additional query messages).

Thereby, it is also advantageously possible to optimize/enhance the partitioning in a first additional step and second additional step. It is possible that the plurality of query messages is a typical set of query messages arising during operation of the system (during the exchange of query messages between network nodes and the NoSQL database functionality). By tracking and analyzing such a plurality of query messages in a first additional step, it is possible that workload information for a specific vertex referenced (or comprised) in the specific graph of the specific query message of the plurality of query messages is generated by a query profile module. It is preferably possible that (respective) workload information for many (or all) vertices referenced (or comprised) in a specific graph of the specific query message of the plurality of query messages is generated by a query profile module. It is possible that the generated workload information is a measure for the workload (or the amount of required resources) when handling/routing the plurality of query messages associated to storing the specific vertex on a specific database entity (and/or the specific vertex in a specific graph partition on a specific database entity). It is advantageously possible that the workload and/or the amount of resources required for routing/handling/answering the plurality of query messages is minimized, because, in dependence of the workload information, a partitioning of the specific graph into a group of graph partitions (and preferably a partitioning of many graphs into groups of graph partitions) is performed by a graph partitioning module, wherein each graph partition of the group of modified graph partitions is distributed to a database entity of the plurality of database entities in a second additional step. Therein, it is, e.g., possible that a group of initial graph partitions is changed/updated, such that the graph partitioning is adapted to the plurality of query messages arising during operation of the system (during the exchange of query messages between network nodes and the NoSQL database functionality).

It is also possible according to an embodiment of the present invention that the first additional step and the second additional step are alternatively or additionally performed with a plurality of query messages comprising a further specific query message instead of the specific query message. In this case, it is especially possible that the first additional step and the second additional step are performed prior to the first step and especially prior to the prestep.

According to an embodiment of the present invention, in a prestep - before the first step - the specific query message is transmitted from the specific query initiating node of the plurality of network nodes with the help of a query router module, wherein the query router module routes the further query message to the specific database entity or to the query handler module of specific database entity, wherein the specific database entity especially comprises at least one graph partition of the specific graph of the specific query message.

According to an embodiment of the present invention, the partitioning in the second additional step is performed utilizing a basic partition cut, a complementary partition cut and/or redundant partitioning, wherein especially a redundant partition or redundant partitioning is implemented close to the specific query initiating node of the plurality of network nodes.

According to an embodiment of the present invention, the specific query message, corresponding to a continuous query, and/or the subscription generated or installed at the query handler module of the specific database entity refers to at least one out of the following:
-- a single vertex or leaf or network node,
-- multiple vertices or leafs or network nodes, especially comprising dynamically changing multiple vertices or leafs or network nodes,
-- network nodes being or having been added or removed to or under a network node of specific interest,
-- network nodes being related to a specific property or state and being related to a network node of specific interest,
-- aggregation and/or threshold conditions, especially related to traffic and/or time aggregations and/or thresholds of one or a plurality of network nodes concerned by the specific query message.

According to an embodiment of the present invention, the query router module is at least partly comprised in or associated with the specific query initiating node of the plurality of network nodes.

It is advantageously possible according to an embodiment of the present invention that the query router module (or parts thereof) is partly comprised in or associated with many (or all) network nodes of the plurality of network nodes.

According to an embodiment of the present invention, the query profile module is at least partly comprised in or associated with the specific database entity, wherein especially the query profile module is partly comprised in or associated with each database entity of the plurality of database entities, wherein the graph partitioning module is at least partly comprised in or associated with the specific database entity, wherein especially the graph partitioning module is partly comprised in or associated with each database of the plurality of database entities, wherein query handler module is at least partly comprised in or associated with the specific database entity, wherein especially the query handler module is partly comprised in or associated with each database entity of the plurality of database entities.

It is advantageously possible according to an embodiment of the present invention that the query profile module is partly comprised in or associated with many database entities of the plurality of database entities. It is additionally or alternatively possible that the graph partitioning module is partly comprised in or associated with many database entities of the plurality of database entities. It is additionally or alternatively possible that the query handler module is partly comprised in or associated with many database entities of the plurality of database entities. It is possible that the query profile module, the graph partitioning module and the query handler module (or parts thereof) are bundled together at a database entity, either as local processes communicating over local sockets or as linked-in libraries or extensions of the database functionality application programming interface (API) (e.g., a Cassandra API).

According to an embodiment of the present invention, the data modeling language with a graph-like or tree-like data structure is YANG and wherein the NoSQL database functionality is a Cassandra-based NoSQL database functionality.

According to an embodiment of the present invention, the partitioning of the specific graph into the group of graph partitions during the second additional step is performed such that a workload indicated by the workload information is minimized.

According to an embodiment of the present invention, the workload information for the specific vertex is further a function of a cost value associated to answering the query messages of the plurality of query messages referencing the specific vertex, wherein especially each query message of the plurality of query messages is weighted with a predefined relative importance value.

Thereby, it is advantageously possible according to an embodiment of the present invention that the vertices referenced in the graphs of query messages of the plurality of query messages are distributed among a plurality of database entities that are part of the NoSQL database functionality in a further enhanced way.

Thereby, it is advantageously possible that the workload and/or the amount of resources required for routing/handling/answering the plurality of query messages is minimized in an enhanced way.

According to an embodiment of the present invention, in the first additional step workload information for a further specific vertex referenced in the specific graph is generated analogous to the generation of the workload information for the specific vertex, wherein especially in the first additional step workload information for each specific vertex referenced in the specific graph is generated analogous to the generation of the workload information for the specific vertex.

It is possible according to an embodiment of the present invention that in the first additional step workload information for a plurality of further (specific) vertices referenced in the specific graph is generated analogous to the generation of the workload information for the specific vertex.

According to an embodiment of the present invention, in the first additional step workload information for each vertex referenced in any of the graphs of the plurality of query messages is generated analogous to the generation of the workload information for the specific vertex, wherein the partitioning of each graph of the plurality of query messages into a respective group of graph partitions - in the second additional step - is performed analogous to the partitioning of the specific graph into the group of graph partitions.

According to an embodiment of the present invention, after the second additional step either:
-- the specific vertex is comprised in only one graph partition or
-- the specific vertex is comprised in a plurality of graph partitions.

Thereby, it is possible according to an embodiment of the present invention that a specific vertex can be comprised in more than one graph partition. Additionally or alternatively, it is possible that a further (specific) vertex is comprised in only one graph partition.

The object of the present invention is also achieved by a system for an enhanced management of configuration information and/or stateful information in a communication network, wherein the communication network comprises a plurality of network nodes and a distributed NoSQL database functionality, wherein the distributed NoSQL database functionality comprises a plurality of database entities, wherein query messages between the plurality of network nodes and the NoSQL database functionality (20) are transmittable using a data modeling language with a graph-like or tree-like data structure, wherein the query messages comprise graphs referencing vertices stored in the plurality of database entities, wherein a specific graph of a specific query message comprises references to at least two vertices and relates to a specific query initiating node of the plurality of network nodes, wherein the system is configured such that the specific query message is received by a specific database entity, and, with the help of a query handler module having access to the NoSQL database functionality, the specific query message is solved and/or answered, wherein, in case that the specific query message corresponds to a continuous query:
-- the specific query message reaches or is received by the query handler module (60) on the specific database entity,
-- a subscription - related to the specific query message and related to the specific query initiating node of the plurality of network nodes - is generated or installed at the query handler module of the specific database entity,
-- the specific query initiating node of the plurality of network nodes is notified on or regarding any changes of the data affected by the specific query message.

Additionally, the object of the present invention is achieved by a program comprising a computer readable program code which, when executed in part on a query profile module, a graph partitioning module, a query router module, a query handler module and/or on a database entity and/or on a network node, causes the query profile module, the graph partitioning module, the query router module, the query handler module and/or the database entity and/or the network node to perform a method according to an embodiment of the present invention.

Additionally, the object of the present invention is achieved by a computer program product for an enhanced management of configuration information and/or stateful information in a communication network, the computer program product comprising a computer program stored on a storage medium, the computer program comprising program code which, when executed in part on a query profile module, a graph partitioning module, a query router module, a query handler module and/or on a database entity and/or on a network node, causes the query profile module, the graph partitioning module, the query router module, the query handler module and/or the database entity and/or the network node to perform a method according to an embodiment of the present invention.

The inventive system, program and computer program product share the advantages described for the inventive method and embodiments of the inventive method.

These and other characteristics, features and advantages of the present invention will become apparent from the following detailed description, taken in conjunction with the accompanying drawings, which illustrate, by way of example, the principles of the invention. The description is given for the sake of example only, without limiting the scope of the invention. The reference figures quoted below refer to the attached drawings.

### BRIEF DESCRIPTION OF THE DRAWINGS

**Figure 1** schematically illustrates a system according to an embodiment of the present invention.
**Figure 2** schematically illustrates network nodes (like the specific query initiating node) of the plurality of network nodes according to an embodiment of the present invention.
**Figure 3** schematically illustrates database entities of the plurality of database entities according to an embodiment of the present invention.

### DETAILED DESCRIPTION

The present invention will be described with respect to particular embodiments and with reference to certain drawings but the invention is not limited thereto but only by the claims. The drawings described are only schematic and are non-limiting. In the drawings, the size of some of the elements may be exaggerated and not drawn on scale for illustrative purposes.

Where an indefinite or definite article is used when referring to a singular noun, e.g. "a", "an", "the", this includes a plural of that noun unless something else is specifically stated.

Furthermore, the terms first, second, third and the like in the description and in the claims are used for distinguishing between similar elements and not necessarily for describing a sequential or chronological order. It is to be understood that the terms so used are interchangeable under appropriate circumstances and that the embodiments of the invention described herein are capable of operation in other sequences than described or illustrated herein.

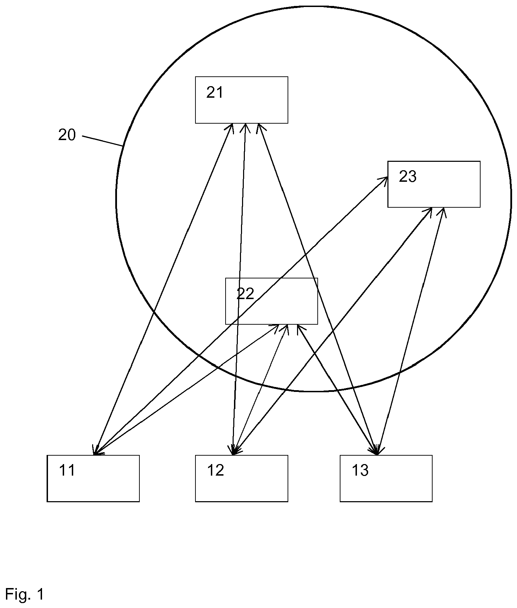

In **Figure 1****,** a system for an enhanced management of configuration information and/or stateful information in a communication network according to an embodiment of the present invention is schematically illustrated. The system comprises the communication network, wherein the communication network comprises a plurality of network nodes 11, 12, 13 and a distributed NoSQL database functionality 20. The distributed NoSQL database functionality 20 comprises a plurality of database entities 21, 22, 23, which may or may not be physically separated from each other (e.g., at different locations). Query messages are transmittable between the plurality of network nodes 11, 12, 13 and the NoSQL database functionality 20 employing a data modeling language with a graph-like or tree-like data structure, especially YANG. Such query message can, e.g., be directed at editing and/or writing and/or retrieving stateful information in and/or from the NoSQL database functionality 20 or at retrieving configuration information from the NoSQL database functionality 20. Additionally or alternatively, such query messages can be related to continuous queries and/or to subscriptions (e.g., subscriptions to changes/updates regarding stateful information and/or configuration information). Therein, communication links between the plurality of network nodes 11, 12, 13 and the plurality of database entities 21, 22, 23 exist. It is also possible that there are communication links between different database entities 21, 22, 23 of the plurality of database entities 21, 22, 23 (not shown) and between different network nodes 11, 12, 13 of the plurality of network nodes 11, 12, 13 (not shown).

According to an embodiment of the present invention, in a prestep - before a first step - a specific query message, related to a continuous query, is transmitted from a specific query initiating node of the plurality of network nodes 11, 12, 13 with the help of a query router module 50 directly or alternatively indirectly to a specific database entity 21, 22, 23. Therein, the query router module 50 routes the further query message to the specific database entity 21, 22, 23 or to the query handler module 60 of specific database entity 21, 22, 23. The specific database entity 21, 22, 23 comprises at least one graph partition 400 of the specific graph of the specific query message. In the first step, after the prestep, the specific query message is received by the specific database entity 21, 22, 23. In the following, within a second step, a subscription - related to the specific query message and related to the specific query initiating node of the plurality of network nodes 11, 12, 13 - is generated or installed at the query handler module 60 of the specific database entity 21, 22, 23. Afterward, in a third step, which may occur multiple times (i.e., can be repeated multiple times), the specific query initiating node of the plurality of network nodes 11, 12, 13 is notified on or regarding any changes of the data affected by the specific query message. Therein a subscription to changes regarding the data related to the specific query message for the specific query initiating node is realized. It is possible that this procedure is repeated for all specific database entities 21, 22, 23 that comprise at least one graph partition 400 of the specific graph of the specific query message, such that subscriptions (for the specific query initiating node) to changes regarding data related to the specific query message for each specific database entity 21, 22, 23 that comprises vertices/graph partitions 400 referenced in the specific query message (or further query messages of the plurality of query messages) are achieved.

It is furthermore possible that the vertices referenced in the specific graph of the specific query message are distributed within a group of graph partitions 400 across the database entities 21, 22, 23 of the NoSQL database functionality 20 by a first additional step and second additional step. In the first additional step, a plurality of query messages is tracked and analyzed by a query profile module 30, wherein the query profile module 30 generates workload information 300 for a specific vertex referenced in the specific graph of the specific query message of the plurality of query messages associated to storing the specific vertex on a specific database entity 21 out of the plurality of database entities 21, 22, 23. The workload information 300 for the specific vertex is a function of:
-- the number of query messages of the plurality of query messages referencing the specific vertex,
-- the frequency of query messages of the plurality of query messages referencing the specific vertex,
-- wherein, in case the specific vertex is the first or last vertex of a graph partition 400 (an edge), the workload information 300 is additionally a function of a communication cost value associated with hopping/transitioning to a vertex in a different graph partition 400 (on another database entity 21, 22, 23). It is furthermore possible that the workload information 300 is also a function of a cost value associated to answering the query messages of the plurality of query messages referencing the specific vertex. It is also possible that each query message of the plurality of query messages is weighted with a predefined relative importance value. In the following (after the first additional step) in a second additional step and in dependence of the workload information 300, a partitioning of the specific graph into a group of graph partitions 400 is performed by a graph partitioning module 40, wherein each graph partition 400 of the group of graph partitions 400 is distributed to at least one different database entity 21, 22, 23 of the plurality of database entities 21, 22, 23. It is also possible that all vertices references in the specific query message are treated/handled like the specific vertex in the first additional step and second additional step. Accordingly, it is possible that vertices referenced in further query messages (possibly related to continuous queries) of the plurality of query messages are distributed within further graph partitions 400 across the database entities 21, 22, 23 by the first additional step and second additional step (just like the specific vertex). Therein, by the first additional step and second additional step, the partitioning is done such that it is especially possible that a query message (e.g., the specific query message, or a further specific query message), transmitted from a (specific) query initiating node of the plurality of network nodes 11, 12, 13 is handled by the first, second and third steps. It is especially possible that the first additional step and second additional step are performed in predefined and/or adjustable time intervals such that the portioning is constantly optimized. It is also possible that the first additional step and second additional steps are performed continuously. It is possible that the first second and third steps occur during, before and/or after the first additional step and/or the second additional step.

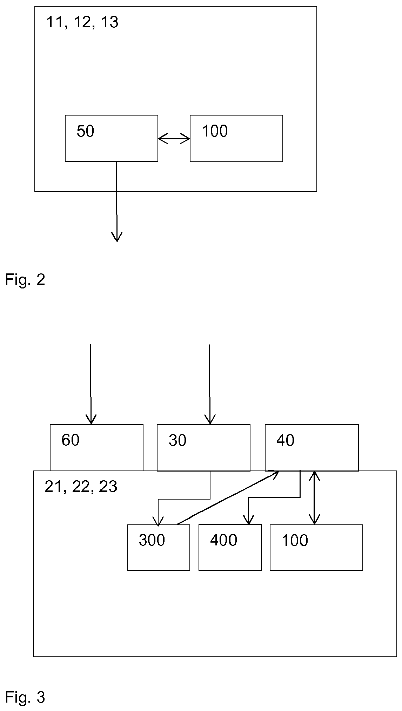

In **Figure 2****,** network nodes 11, 12, 13 (e.g., the specific query initiating node) of the plurality of network nodes 11, 12, 13 according to an embodiment of the present invention are schematically illustrated. The network nodes 11, 12, 13 partly comprise a query router module 50 (at least a part thereof). The query router module 50 (or the part of the query router module 50) is configured to route and or transmit query messages (e.g. the specific query message) from the specific network node 11 to the database entity 21, 22, 23 of the NoSQL database functionality 20 that comprises at least one graph partition 400 of the graph of the query message, as depicted by the arrow starting at the query router module 50 in Figure 2. Therein, it is possible that the query router module 50 routes/transmits any particular query message from the network node 11, 12, 13 to a database entity 21, 22, 23, which comprises a graph partition 400, comprising a vertex referenced in the graph of the particular query message. Furthermore, it is preferred that the network node 11, 12, 13 and/or the query router module 50 comprises or has access to a query routing map 100 (or a part thereof). The query routing map 100 may comprise information on which graph partitions 400 (and/or which vertices) are comprised/stored on which database entity 21, 22, 23. It is possible that all network nodes 11, 12, 13 or only some network nodes 11, 12, 13 of the plurality of network nodes 11, 12, 13 are formed as schematically illustrated in Figure 2.

In **Figure 3****,** database entities 21, 22, 23 of the plurality of database entities 21, 22, 23 according to an embodiment of the present invention are schematically illustrated. A query profile module 30 is at least partly comprised in or associated with the database entity 21, 22, 23. Furthermore, a graph partitioning module 40 is at least partly comprised in or associated with the database entity 21, 22, 23. Also, a query handler module 60 is at least partly comprised in or associated with the database entity 21, 22, 23. A graph partition 400 (or graph partitions 400) is comprised in the database entity 21, 22, 23. The graph partition 400 is a result of the partitioning of a specific graph of a specific query message of a plurality of query messages or of many specific graphs of query messages of a plurality of query messages by the graph partitioning module 40 in a second additional step. Furthermore, workload information 300 is comprised in the database entity 21, 22, 23. The workload information 300 is generated by the query profile module 30, after the query profile module tracked and analyzed a plurality of query messages. The workload information 300 concerns a specific vertex referenced in the specific graph of the specific query message of the plurality of query messages and is associated to storing the specific vertex on a database entity 21, 22, 23 out of the plurality of database entities 21, 22, 23. In particular, the workload information 300 is a function of the number of query messages of the plurality of query messages referencing the specific vertex, the frequency of query messages of the plurality of query messages referencing the specific vertex and - in case the specific vertex is the first or last vertex of a graph partition 400 - , the workload information 300 is additionally a function of a communication cost value associated with hopping/transitioning to a vertex in a different graph partition 400. It is possible that workload information 300 concerning each vertex referenced in the specific graph of the specific query message is comprised in the database entity 21, 22, 23 and also that workload information 300 concerning each vertex referenced in each graph of each query message of the plurality of query messages is comprised in the database entity 21, 22, 23 (especially at least for every vertex that is comprised in the database entity 21, 22, 23). It is possible that all database entities 21, 22, 23 or only some database entities 21, 22, 23 of the plurality of database entities 21, 22, 23 are formed as schematically illustrated in Figure 3.

## Claims

1. Method for an enhanced management of configuration information and/or stateful information in a communication network, wherein the communication network comprises a plurality of network nodes (11, 12, 13) and a distributed NoSQL database functionality (20), wherein the distributed NoSQL database functionality (20) comprises a plurality of database entities (21, 22, 23), wherein query messages between the plurality of network nodes (11, 12, 13) and the NoSQL database functionality (20) are transmitted using a data modeling language with a graph-like or tree-like data structure, wherein the query messages comprise graphs referencing vertices stored in the plurality of database entities (21, 22, 23),
wherein a specific graph of a specific query message comprises references to at least two vertices and relates to a specific query initiating node of the plurality of network nodes (11, 12, 13),
wherein the specific query message is received by a specific database entity (21, 22, 23), and, with the help of a query handler module (60) having access to the NoSQL database functionality (20), the specific query message is solved and/or answered,
wherein, in case that the specific query message corresponds to a continuous query, the method comprises the following steps:
-- in a first step, the specific query message reaches or is received by the query handler module (60) on the specific database entity (21, 22, 23),
-- in a second step, subsequent to the first step, a subscription - related to the specific query message and related to the specific query initiating node of the plurality of network nodes (11, 12, 13) - is generated or installed at the query handler module (60) of the specific database entity (21, 22, 23),
-- in a third step, subsequent to the second step, the specific query initiating node of the plurality of network nodes (11, 12, 13) is notified on or regarding any changes of the data affected by the specific query message.

2. Method according to claim 1, wherein the at least two vertices referenced in the specific graph are distributed within a group of graph partitions (400) across the database entities (21, 22, 23) of the NoSQL database functionality (20) by the following additional steps:
-- in a first additional step, a plurality of query messages is tracked and analyzed by a query profile module (30), wherein the query profile module (30) generates workload information (300) for a specific vertex referenced in the specific graph of the specific query message of the plurality of query messages associated to storing the specific vertex on a specific database entity (21) out of the plurality of database entities (21, 22, 23), wherein the workload information (300) for the specific vertex is a function of
-- the number of query messages of the plurality of query messages referencing the specific vertex,
-- the frequency of query messages of the plurality of query messages referencing the specific vertex,
-- wherein, in case the specific vertex is the first or last vertex of a graph partition (400), the workload information (300) is additionally a function of a communication cost value associated with hopping/transitioning to a vertex in a different graph partition (400),
-- in a second additional step - after the first additional step - in dependence of the workload information (300), a partitioning of the specific graph into a group of graph partitions (400) is performed by a graph partitioning module (40), wherein each graph partition (400) of the group of graph partitions (400) is distributed to at least one different database entity (21, 22, 23) of the plurality of database entities (21, 22, 23).

3. Method according to any of the preceding claims, wherein in a prestep - before the first step - the specific query message is transmitted from the specific query initiating node of the plurality of network nodes (11, 12, 13) with the help of a query router module (50), wherein the query router module (50) routes the further query message to the specific database entity (21, 22, 23) or to the query handler module (60) of specific database entity (21, 22, 23), wherein the specific database entity (21, 22, 23) especially comprises at least one graph partition (400) of the specific graph of the specific query message.

4. Method according to claim 2, wherein the partitioning in the second additional step is performed utilizing a basic partition cut, a complementary partition cut and/or redundant partitioning, wherein especially a redundant partition or redundant partitioning is implemented close to the specific query initiating node of the plurality of network nodes (11, 12, 13).

5. Method according to any of the preceding claims, wherein the specific query message, corresponding to a continuous query, and/or the subscription generated or installed at the query handler module (60) of the specific database entity (21, 22, 23) refers to at least one out of the following:
-- a single vertex or leaf or network node,
-- multiple vertices or leafs or network nodes, especially comprising dynamically changing multiple vertices or leafs or network nodes,
-- network nodes being or having been added or removed to or under a network node of specific interest,
-- network nodes being related to a specific property or state and being related to a network node of specific interest,
-- aggregation and/or threshold conditions, especially related to traffic and/or time aggregations and/or thresholds of one or a plurality of network nodes concerned by the specific query message.

6. Method according to any of the preceding claims, wherein the query router module (50) is at least partly comprised in or associated with the specific query initiating node of the plurality of network nodes (11, 12, 13).

7. Method according to any of the preceding claims, wherein the query profile module (30) is at least partly comprised in or associated with the specific database entity (21),
wherein especially the query profile module (30) is partly comprised in or associated with each database entity (21, 22, 23) of the plurality of database entities (21, 22, 23),
wherein the graph partitioning module (40) is at least partly comprised in or associated with the specific database entity (21), wherein especially the graph partitioning module (40) is partly comprised in or associated with each database entity (21, 22, 23) of the plurality of database entities (21, 22, 23), wherein query handler module (60) is at least partly comprised in or associated with the specific database entity (21), wherein especially the query handler module (60) is partly comprised in or associated with each database entity (21, 22, 23) of the plurality of database entities (21, 22, 23).

8. Method according to any of the preceding claims, wherein the data modeling language with a graph-like or tree-like data structure is YANG and wherein the NoSQL database functionality is a Cassandra-based NoSQL database functionality.

9. Method according to any of claims 2 to 8, wherein the partitioning of the specific graph into the group of graph partitions (400) during the second additional step is performed such that a workload indicated by the workload information (300) is minimized.

10. System for an enhanced management of configuration information and/or stateful information in a communication network, wherein the communication network comprises a plurality of network nodes (11, 12, 13) and a distributed NoSQL database functionality (20), wherein the distributed NoSQL database functionality (20) comprises a plurality of database entities (21, 22, 23), wherein query messages between the plurality of network nodes (11, 12, 13) and the NoSQL database functionality (20) are transmittable using a data modeling language with a graph-like or tree-like data structure, wherein the query messages comprise graphs referencing vertices stored in the plurality of database entities (21, 22, 23),
wherein a specific graph of a specific query message comprises references to at least two vertices and relates to a specific query initiating node of the plurality of network nodes (11, 12, 13),
wherein the system is configured such that the specific query message is received by a specific database entity (21, 22, 23), and, with the help of a query handler module (60) having access to the NoSQL database functionality (20), the specific query message is solved and/or answered, wherein, in case that the specific query message corresponds to a continuous query:
-- the specific query message reaches or is received by the query handler module (60) on the specific database entity (21, 22, 23),
-- a subscription - related to the specific query message and related to the specific query initiating node of the plurality of network nodes (11, 12, 13) - is generated or installed at the query handler module (60) of the specific database entity (21, 22, 23),
-- the specific query initiating node of the plurality of network nodes (11, 12, 13) is notified on or regarding any changes of the data affected by the specific query message.

11. Program comprising a computer readable program code which, when executed in part on a query profile module (30), a graph partitioning module (40), a query router module (50), a query handler module (60) and/or on a database entity and/or on a network node, causes the query profile module (30), the graph partitioning module (40), the query router module (50), the query handler module (60) and/or the database entity and/or the network node to perform a method according to any one of claims 1 to 9.

12. Computer program product for an enhanced management of configuration information and/or stateful information in a communication network, the computer program product comprising a computer program stored on a storage medium, the computer program comprising program code which, when executed in part on a query profile module (30), a graph partitioning module (40), a query router module (50), a query handler module (60) and/or on a database entity and/or on a network node, causes the query profile module (30), the graph partitioning module (40), the query router module (50), the query handler module (60) and/or the database entity and/or the network node to perform a method according to any one of claims 1 to 9.
